# EUROPEAN PATENT SPECIFICATION

(11) **EP 3 613 537 B1**
(45) Date of publication and mention of the grant of the patent: **17.02.2021**
(21) Application number: 19193132.8
(22) Date of filing: 22.08.2019
(51) Int. Cl.: B23Q 11/00, B23Q 11/10, A61C 13/00, A61C 13/08, F16N 31/00

(54) **CUTTING APPARATUS**
SCHNEIDVORRICHTUNG
APPAREIL DE DÉCOUPAGE

(30) Priority: 22.08.2018 JP 2018155393
(43) Date of publication of application: 26.02.2020
(73) Proprietor: DGSHAPE Corporation, Hamamatsu-shi, Shizuoka 431-2103 (JP)
(72) Inventor: MOCHIZUKI, Ryusuke, Shizuoka 431-2103 (JP); SUYAMA, Akihiro, Hamamatsu-shi, Shizuoka 431-2103 (JP)
(74) Representative: Grünecker Patent- und Rechtsanwälte PartG mbB

(56) References cited:
- CN-A- 105 796 198
- KR-A- 20100 061 884

## Description

### BACKGROUND OF THE INVENTION

### 1. Field of the Invention

The present invention relates to a cutting apparatus according to the preamble of claim 1. Document KR-A 2010 0061884 forms the basis for the preamble of this claim.

### 2. Description of the Related Art

Cutting apparatuses known in the related art cut ceramic or resin workpieces into desired shapes. Such a cutting apparatus includes, for example, a case body, a retainer, and a gripper. A machining space is defined in the case body. The retainer is disposed in the machining space and retains a workpiece. The gripper is disposed in the machining space and grips a machining tool to carry out machining (e.g., cutting and/or grinding) on the workpiece.

During cutting, friction occurs between the workpiece and the machining tool. An increase in frictional force resulting from the friction may require a greater cutting force during cutting. Heat caused by the friction may deform the workpiece or may promote wearing away of the machining tool. To solve these problems, JP 2016-135519 A, for example, discloses a "wet type" cutting apparatus that includes a liquid discharger and a storage tank in addition to the above-described components of the cutting apparatus known in the related art. The liquid discharger discharges a cutting liquid (e.g., a coolant) onto the machining tool and the workpiece so as to reduce friction between the machining tool and the workpiece and cool the machining tool and the workpiece. The storage tank stores the coolant.

### SUMMARY OF THE INVENTION

The storage tank of the cutting apparatus disclosed in JP 2016-135519 A is detachably disposed in a housing space located below the machining space. Through a drainage port defined on the bottom of the machining space, the coolant used during cutting is collected into the storage tank for reuse. Carrying out cutting repeatedly may contaminate the coolant in the storage tank or reduce the amount of the coolant in the storage tank. In such a case, a user removes the storage tank from the housing space. If the user removes the storage tank with force, however, the coolant remaining, for example, on the edge of the drainage port may drip and contaminate the inside of the housing space.

Accordingly, the problem to be solved by the present invention is to provide a cutting apparatus whose internal space is unlikely to be contaminated with a coolant when a storage tank is detached from the cutting apparatus.

The above problem is solved with a cutting apparatus comprising the features of claim 1. The cutting apparatus according to the present invention includes a case body, a retainer, a gripper, a liquid discharger, a storage tank, and a movable member. The case body internally includes a machining space, a housing space located below the machining space, and a communication port through which the machining space is in communication with the housing space. The retainer is disposed in the machining space. The retainer retains a workpiece. The gripper is disposed in the machining space. The gripper grips a machining tool to cut the workpiece. The liquid discharger discharges a coolant into the machining space. The storage tank is detachably disposed in the housing space. The storage tank collects the coolant discharged from the liquid discharger and passed through the communication port. The movable member is disposed between the communication port and the storage tank. The movable member is located at a first position when the storage tank is not disposed in the housing space. The movable member is located at a second position when the storage tank is disposed in the housing space. The movable member located at the first position functions as a liquid holder to hold the coolant.

Preferably, the liquid holder defined by at least a portion of the movable member is located under the communication port when the storage tank is not disposed in the housing space. Thus, if the coolant remains, for example, on the edge of the communication port and droplets of the coolant drip when the storage tank is detached from the cutting apparatus, the droplets would accumulate in the liquid holder. This prevents the droplets of the coolant from dripping into the housing space and thus makes it unlikely that the housing space will be contaminated with the coolant. Consequently, the housing space is kept in a clean state.

The present invention provides a cutting apparatus whose internal space is unlikely to be contaminated with a coolant when a storage tank is detached from the cutting apparatus.

### BRIEF DESCRIPTION OF THE DRAWINGS

FIG. 1 is a perspective view of a cutting apparatus according to an embodiment of the present invention.
FIG. 2 is a front view of the cutting apparatus illustrated in FIG. 1, with its front upper cover opened.
FIG. 3 is a cross-sectional view of the cutting apparatus illustrated in FIG. 1, with its front upper cover closed.
FIG. 4 is a perspective view of a workpiece attached to an adapter according to the embodiment of the present invention.
FIG. 5 is a perspective view of a tool magazine and a clamp according to the embodiment of the present invention.
FIG. 6 is a front view of the tool magazine and the clamp according to the embodiment of the present invention.
FIG. 7 is a perspective view of a storage tank according to the embodiment of the present invention.
FIG. 8 is a perspective view of a movable member according to the embodiment of the present invention.
FIG. 9 is a perspective view of an urger according to the embodiment of the present invention.
FIG. 10 is a partial cross-sectional view of the cutting apparatus, illustrating components thereof located adjacent to a drainage port when the storage tank is not disposed in the cutting apparatus.
FIG. 11 is a partial cross-sectional view of the cutting apparatus, illustrating components thereof located adjacent to the drainage port when the storage tank is disposed in the cutting apparatus.

### DETAILED DESCRIPTION OF THE PREFERRED EMBODIMENTS

Cutting apparatuses according to embodiments of the present invention will be described below with reference to the drawings. The embodiments described below are naturally not intended to limit the present invention in any way. Components or elements having the same functions are identified by the same reference signs, and description thereof will be simplified or omitted when deemed redundant.

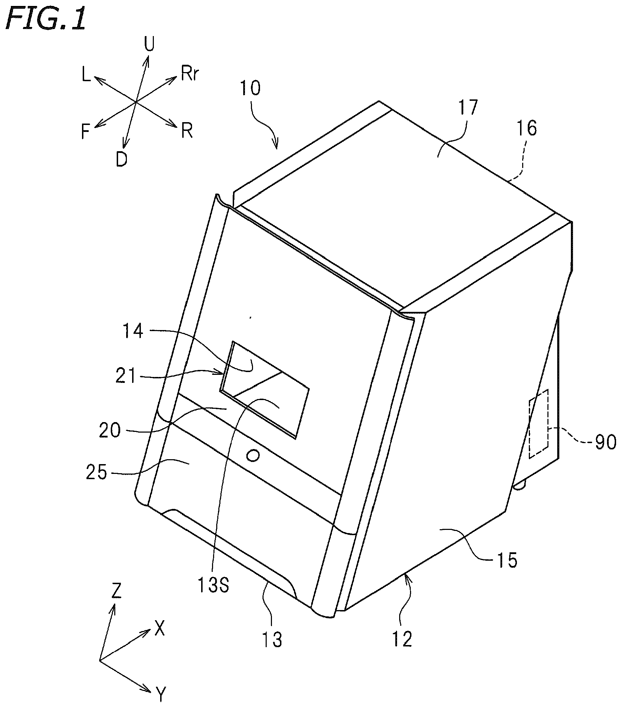

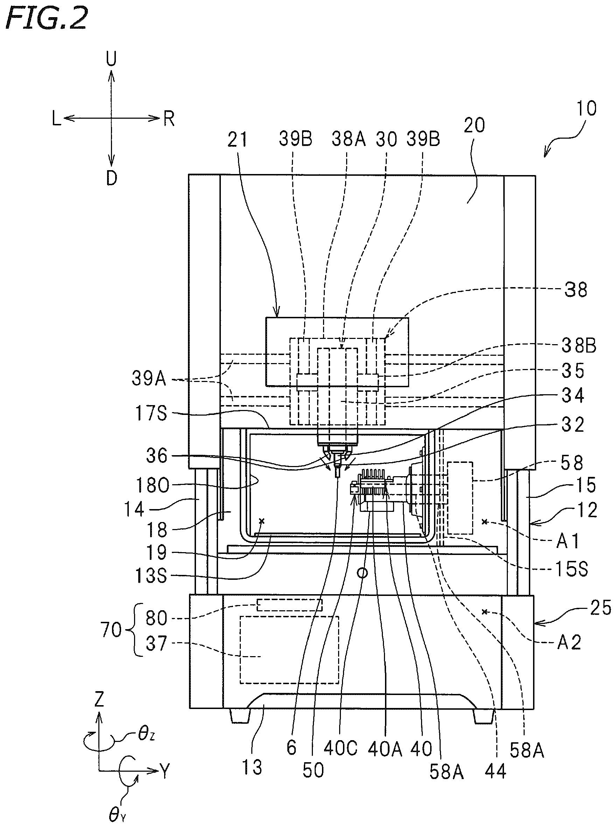

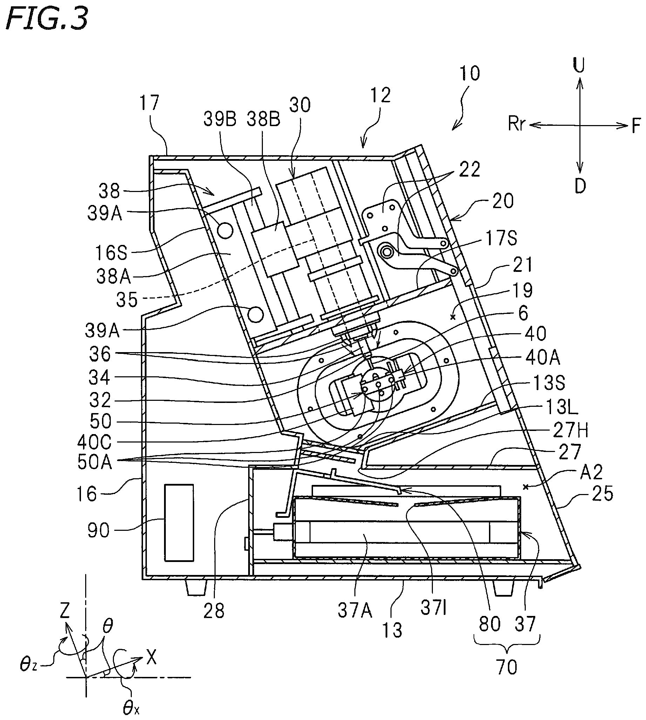

FIG. 1 is a perspective view of a cutting apparatus 10. FIG. 2 is a front view of the cutting apparatus 10, with its front upper cover 20 opened. FIG. 3 is a cross-sectional view of the cutting apparatus 10, with the front upper cover 20 closed. The following description is based on the assumption that when a user faces the front of the cutting apparatus 10, a direction from the rear of the cutting apparatus 10 toward the user is a forward direction and a direction from the user toward the rear of the cutting apparatus 10 is a rearward direction. The terms "right", "left", "up", and "down" respectively refer to right, left, up, and down with respect to the user facing the front of the cutting apparatus 10. The reference signs F, Rr, R, L, U, and D in the drawings respectively represent front, rear, right, left, up, and down.

The cutting apparatus 10 is disposed on a coordinate system including an X axis, a Y axis, and a Z axis perpendicular to each other (which will hereinafter be referred to as an "X, Y, and Z orthogonal coordinate system"). The X axis extends substantially in a front-rear direction. As illustrated in FIG. 3, the X axis is inclined relative to a horizontal direction by an angle θ in the present embodiment. Alternatively, the X axis may extend in the horizontal direction. The Y axis extends in a right-left direction. The Z axis extends substantially in an up-down direction. As illustrated in FIG. 3, the Z axis is inclined relative to a vertical direction by the angle θ in the present embodiment. Alternatively, the Z axis may extend in the vertical direction. The reference sign θ_{X} represents a rotational direction around the X axis. The reference sign θ_{Y} represents a rotational direction around the Y axis. The reference sign θ_{Z} represents a rotational direction around the Z axis. These directions are defined merely for the sake of convenience of description and do not limit in any way how the cutting apparatus 10 may be installed. These directions do not limit the present invention in any way.

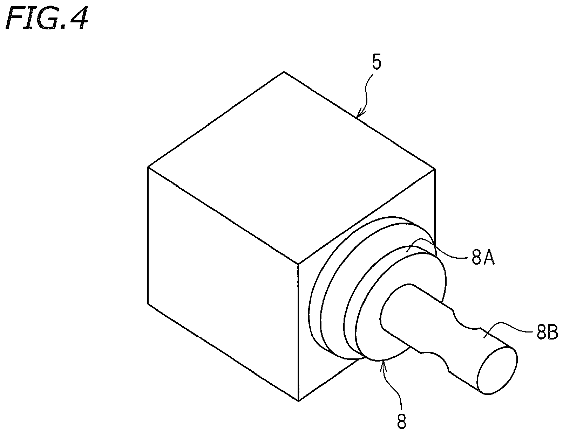

The cutting apparatus 10 cuts a workpiece 5 (see FIG. 4). The cutting apparatus 10 grinds the workpiece 5 when necessary. The cutting apparatus 10 machines the workpiece 5 so as to fabricate a molded article for dental use. Examples of such a molded article include a dental prosthetic (such as a crown, an inlay, an onlay, or a veneer), an artificial tooth, and a denture base. In the present embodiment, the workpiece 5 has a block shape (such as a cubic or cuboid shape). Alternatively, the workpiece 5 may have any other suitable shape, such as a disk shape. Examples of material(s) for the workpiece 5 include resin materials (such as polymethyl methacrylate (PMMA) resin, polyether ether ketone (PEEK) resin, and hybrid resin), ceramic materials (such as glass ceramic and zirconia), wax, and gypsum. When zirconia is selected as a material for the workpiece 5, semi-sintered zirconia, for example, is used. The workpiece 5 is not limited to any particular shape or material.

As illustrated in FIG. 4, the workpiece 5 is attached to an adapter 8 (which may also be referred to as a "holder") in the present embodiment. The workpiece 5 attached to the adapter 8 is held in the cutting apparatus 10. The workpiece 5 retained by the adapter 8 is subjected to cutting. The adapter 8 includes a plate member 8A and a connecting pin 8B. The plate member 8A is attached to the workpiece 5. The connecting pin 8B protrudes from the plate member 8A. The connecting pin 8B is inserted into an insertion hole 50A defined in a clamp 50 (which will be described below).

The cutting apparatus 10 is configured such that a coolant is usable during cutting. The cutting apparatus 10 is a "wet type" cutting apparatus. As used herein, the term "coolant" may refer to a water-soluble coolant or a water-insoluble coolant. The term "coolant" may refer to water or a coolant provided by adding, for example, an additive to water so as to enhance the cooling effect of the water. In one example, the coolant may consist mainly of water (which is higher in mass percentage than other components) and contain a water-insoluble component (such as mineral oil or grease) and a surfactant.

As illustrated in FIGS. 1 to 3, the cutting apparatus 10 has a box shape. The cutting apparatus 10 includes a case body 12, the front upper cover 20, and a front lower cover 25. The case body 12 is a casing of the cutting apparatus 10. The case body 12 is hollow. The case body 12 includes a bottom wall 13, a left wall 14, a right wall 15, a rear wall 16, an upper wall 17, a front wall 18, a first bottom partition 13S, a right partition 15S, a first rear partition 16S, an upper partition 17S, a second bottom partition 27, and a second rear partition 28. The left wall 14 extends upward from the left end of the bottom wall 13. The right wall 15 extends upward from the right end of the bottom wall 13. The rear wall 16 extends upward from the rear end of the bottom wall 13. The left end of the rear wall 16 is connected to the rear end of the left wall 14. The right end of the rear wall 16 is connected to the rear end of the right wall 15. The front wall 18 extends upward from the front end of the first bottom partition 13S. The left end of the front wall 18 is connected to the front end of the left wall 14. The right end of the front wall 18 is connected to the front end of the right wall 15. The upper end of the front wall 18 is connected to the front end of the upper wall 17. The upper wall 17 is connected to the upper ends of the left wall 14, the right wall 15, the rear wall 16, and the front wall 18.

The first bottom partition 13S is located above the bottom wall 13. The first bottom partition 13S extends from the front of the cutting apparatus 10 toward the rear of the cutting apparatus 10 such that the first bottom partition 13S is inclined gradually downward. A lid 13L is disposed behind the first bottom partition 13S. The lid 13L has a mesh structure that allows the coolant to pass therethrough in the up-down direction. The right partition 15S is disposed rightward of the left wall 14 and leftward of the right wall 15. The right partition 15S extends upward from the first bottom partition 13S. The first rear partition 16S is disposed forward of the rear wall 16 and rearward of the front wall 18. The first rear partition 16S is connected to the first bottom partition 13S, the left wall 14, the right partition 15S, and the upper partition 17S. The upper partition 17S is disposed above the first bottom partition 13S and below the upper wall 17.

The second bottom partition 27 is disposed below the first bottom partition 13S and above the bottom wall 13. The second bottom partition 27 extends in parallel or substantially in parallel with the bottom wall 13. The second bottom partition 27 is provided with a drainage port 27H passing through the second bottom partition 27 in the up-down direction. The drainage port 27H is constantly in an open state. The drainage port 27H is provided with no switching member (such as a valve element) that enables switching between the open state and closed state. The second rear partition 28 is disposed forward of the rear wall 16 and rearward of the front wall 18. The second rear partition 28 is disposed below the first rear partition 16S. The second rear partition 28 extends in parallel or substantially in parallel with the rear wall 16. The second rear partition 28 extends upward from the bottom wall 13. The upper end of the second rear partition 28 is connected to the second bottom partition 27.

A lateral surface of the case body 12 (which is the front wall 18 of the case body 12 in the present embodiment) is provided with an opening 180. The opening 180 is defined by the left wall 14, the first bottom partition 13S, the right partition 15S, and the upper partition 17S. The internal space of the case body 12 is divided into a right space and a left space by the right partition 15S. The left space of the case body 12 defines a machining space 19 surrounded by the left wall 14, the first bottom partition 13S, the right partition 15S, the upper partition 17S, the first rear partition 16S, and the front upper cover 20. The machining space 19 is a space where the workpiece 5 is to be cut. The right space of the case body 12 defines a first housing space A1 surrounded by the right partition 15S, the first bottom partition 13S, the right wall 15, the upper partition 17S, the first rear partition 16S, and the front wall 18. A second housing space A2 is defined below the machining space 19. The second housing space A2 is surrounded by the left wall 14, the bottom wall 13, the right wall 15, the second bottom partition 27, the second rear partition 28, and the front lower cover 25. The second housing space A2 is in constant communication with the machining space 19 through the drainage port 27H defined in the second bottom partition 27. The drainage port 27H is an example of a communication port through which the machining space 19 is in communication with the second housing space A2.

The front upper cover 20 is supported by support arms 22. An end of each support arm 22 is attached to the case body 12. The front upper cover 20 moves in the up-down direction, with each support arm 22 being rotated around its pivot (not illustrated), so as to cover and uncover the opening 180. This enables switching between an open state where the opening 180 of the case body 12 is uncovered by the front upper cover 20 and a closed state where the opening 180 of the case body 12 is covered by the front upper cover 20. The user moves the front upper cover 20 upward so as to uncover the opening 180 in, for example, placing the workpiece 5 in the cutting apparatus 10, removing the workpiece 5 from the cutting apparatus 10, or performing maintenance of the cutting apparatus 10. Uncovering the opening 180 brings the machining space 19 into communication with an external space. The user moves the front upper cover 20 downward so as to cover the opening 180 in carrying out cutting. Covering the opening 180 brings the machining space 19 out of communication with the external space. In the present embodiment, the front upper cover 20 is manually movable in the up-down direction by the user. Alternatively, a motor, for example, may be connected to the support arms 22, and the motor may be driven so as to automatically move the front upper cover 20 in the up-down direction.

The front upper cover 20 is provided with a window 21. The window 21 is smaller than the opening 180 of the case body 12 when viewed along the X axis. The window 21 is made of, for example, a transparent acrylic plate or glass plate. The user would be able to visually check the machining space 19 through the window 21 if the opening 180 is covered by the front upper cover 20 (e.g., during cutting). Because the window 21 is optional, the front upper cover 20 does not necessarily have to be provided with the window 21.

The front lower cover 25 is slidable in the front-rear direction along a support (not illustrated) attached to the left wall 14 and the right wall 15. The movement of the front lower cover 25 in the front-rear direction enables switching between an open state where the second housing space A2 is uncovered by the front lower cover 25 and a closed state where the second housing space A2 is covered by the front lower cover 25. The user slides the front lower cover 25 forward in attaching or detaching a storage tank 37 (which stores the coolant) to or from the cutting apparatus 10. The user slides the front lower cover 25 rearward in carrying out cutting. Sliding the front lower cover 25 rearward covers the second housing space A2. Covering the second housing space A2 during cutting prevents the user from removing the storage tank 37 by mistake in the course of cutting the workpiece 5. Because the front lower cover 25 is optional, the cutting apparatus 10 does not necessarily have to include the front lower cover 25. The second housing space A2 may be constantly uncovered.

The cutting apparatus 10 includes a carriage 38, a tool magazine 40, the clamp 50, a conveyor 58, a liquid collector 70, and a controller 90. The carriage 38 is disposed above the machining space 19. The carriage 38 is equipped with a spindle 30 and liquid discharge nozzles 36. The spindle 30 passes through the upper partition 17S. The tool magazine 40 and the clamp 50 are disposed in the machining space 19. The conveyor 58 is disposed in the first housing space A1. The liquid collector 70 is disposed below the machining space 19.

The carriage 38 is movable in a Z-axis direction and a Y-axis direction. As used herein, the term "Z-axis direction" refers to a direction extending along the Z axis, and the term "Y-axis direction" refers to a direction extending along the Y axis. The carriage 38 includes a first carriage 38A and a second carriage 38B. The first carriage 38A is supported by a pair of first guide shafts 39A extending in the Y-axis direction. The first carriage 38A is movable in the Y-axis direction along the first guide shafts 39A by a first driver (not illustrated). The left ends of the first guide shafts 39A are connected to the left wall 14. The right ends of the first guide shafts 39A pass through the right partition 15S and are connected to the right wall 15. The second carriage 38B is supported by a pair of second guide shafts 39B extending in the Z-axis direction. The second carriage 38B is movable in the Z-axis direction along the second guide shafts 39B by a second driver (not illustrated). The second guide shafts 39B are provided on the first carriage 38A. Thus, moving the first carriage 38A in the Y-axis direction moves the second carriage 38B in the Y-axis direction accordingly. The first driver and the second driver are electrically connected to the controller 90 and controlled by the controller 90.

The spindle 30 is provided on the second carriage 38B. The spindle 30 moves on the X, Y, and Z orthogonal coordinate system in accordance with the movement of the carriage 38. More specifically, the spindle 30 moves in the Z-axis direction in accordance with the movement of the second carriage 38B and moves in the Y-axis direction in accordance with the movement of the first carriage 38A. The spindle 30 supports a machining tool 6 such that the machining tool 6 is rotatable. The machining tool 6 may be a milling bar. The spindle 30 cuts the workpiece 5 by rotating the machining tool 6. The spindle 30 includes a gripper 32, a rotator 34, and a seal 35. In one example, the gripper 32 may be a collet chuck. The seal 35 has a cylindrical shape. The seal 35 extends in the up-down direction. The lower end of the seal 35 is provided with the rotator 34. The rotator 34 rotates relative to the seal 35.

The lower end of the rotator 34 is provided with the gripper 32. The gripper 32 rotates together with the rotator 34. The gripper 32 supports (or grips) the upper end of the machining tool 6. Although not illustrated, the gripper 32 includes a plurality of supports arranged on an X-Y plane in the present embodiment. The gripper 32 supports the machining tool 6 by holding the upper end of the machining tool 6 between the supports. The rotator 34 rotates the machining tool 6 supported by the gripper 32. The rotator 34 is connected with a first motor (not illustrated). The first motor is electrically connected to the controller 90 and controlled by the controller 90. Driving the first motor rotates the rotator 34 in the rotational direction θ_{Z} around the Z axis. In accordance with the rotation of the rotator 34, the machining tool 6 gripped by the gripper 32 rotates in the rotational direction θ_{Z} around the Z axis.

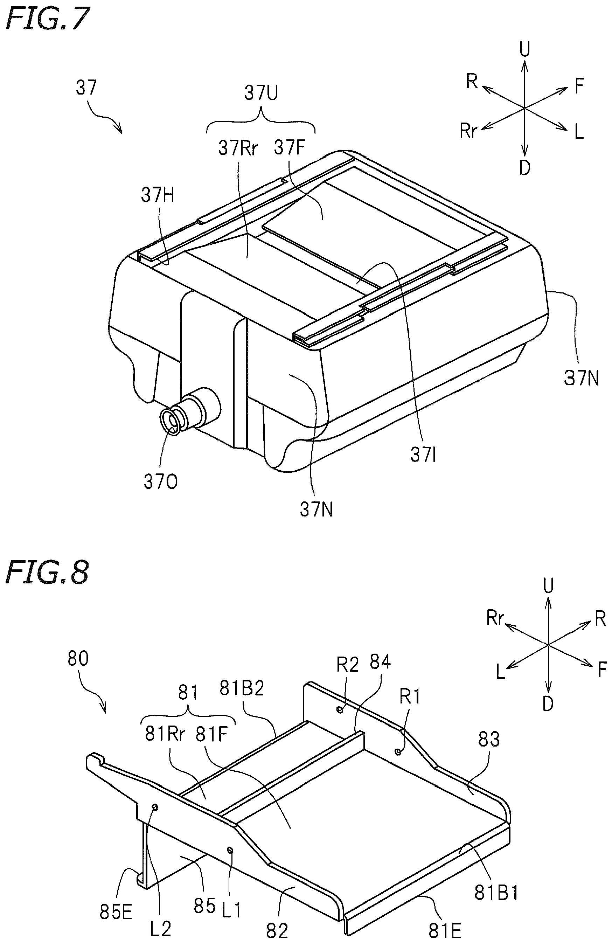

The liquid discharge nozzles 36 are disposed laterally of the spindle 30. Similarly to the spindle 30, the liquid discharge nozzles 36 move on the X, Y, and Z orthogonal coordinate system in accordance with the movement of the carriage 38. In the present embodiment, the number of liquid discharge nozzles 36 is four in total such that one of the liquid discharge nozzles 36 is disposed in front of the spindle 30, another one of the liquid discharge nozzles 36 is disposed behind the spindle 30, still another one of the liquid discharge nozzles 36 is disposed rightward of the spindle 30, and yet another one of the liquid discharge nozzles 36 is disposed leftward of the spindle 30. The liquid discharge nozzles 36 may be disposed at any other suitable locations. The carriage 38 may be provided with any other number of liquid discharge nozzles 36. The outlets of the liquid discharge nozzles 36 are disposed above the clamp 50 and the machining tool 6. As indicated by the arrows in FIG. 2, for example, the liquid discharge nozzles 36 discharge the coolant into the machining space 19 while the workpiece 5 is machined with the machining tool 6. The liquid discharge nozzles 36 typically discharge the coolant onto the machining tool 6 and/or the workpiece 5. Each of the liquid discharge nozzles 36 is an example of a liquid discharger. The liquid discharge nozzles 36 are connected to a supply port 37O (see FIG. 7) of the storage tank 37 through a liquid supply passage (not illustrated). The liquid supply passage may be made of any suitable material and may have any suitable shape and size. In one example, the liquid supply passage is an easily deformable resin tube. A liquid supply device, such as a pump, may be disposed at a location somewhere along the liquid supply passage.

The conveyor 58 moves the tool magazine 40 in an X-axis direction. As used herein, the term "X-axis direction" refers to a direction extending along the X axis. The conveyor 58 is disposed rightward of the tool magazine 40. The conveyor 58 includes a shaft 58A extending in the Y-axis direction. The shaft 58A passes through the right partition 15S. A portion of the shaft 58A (e.g., the right portion of the shaft 58A) is disposed in the first housing space A1. Another portion of the shaft 58A (e.g., the left portion of the shaft 58A) is disposed in the machining space 19. The left end of the shaft 58A is provided with the clamp 50 and the tool magazine 40. The conveyor 58 is movable in the X-axis direction by a third driver (not illustrated). The third driver is electrically connected to the controller 90 and controlled by the controller 90.

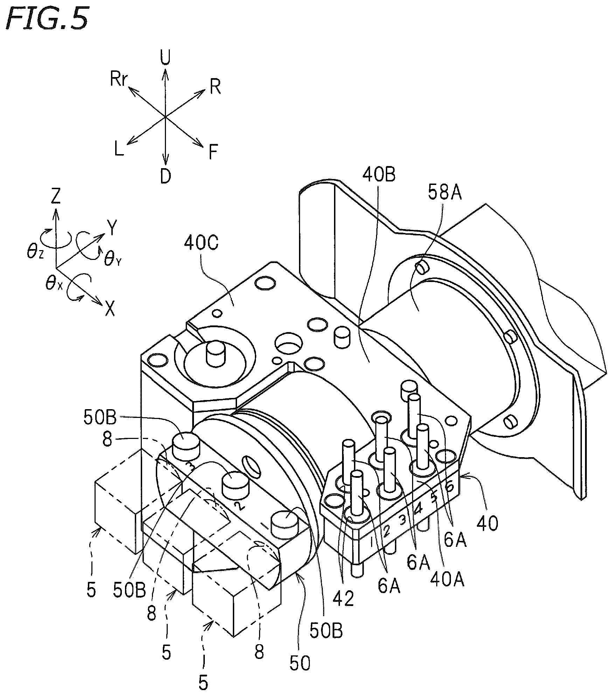

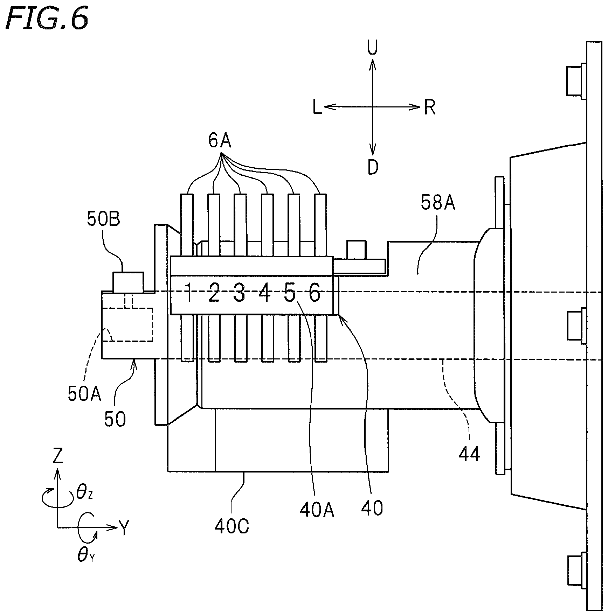

FIG. 5 is a perspective view of the tool magazine 40 and the clamp 50. FIG. 6 is a front view of the tool magazine 40 and the clamp 50. The tool magazine 40 is able to hold a plurality of the machining tools 6. The tool magazine 40 is provided between the clamp 50 and the conveyor 58. Moving the conveyor 58 in the X-axis direction moves the tool magazine 40 in the X-axis direction. The tool magazine 40 includes a first portion 40A, a second portion 40B, and a third portion 40C. The first portion 40A holds the machining tools 6. The second portion 40B is located rearward of the first portion 40A. The second portion 40B is connected to the shaft 58A. The third portion 40C is located rearward of the second portion 40B. The first portion 40A of the tool magazine 40 is provided with a plurality of holes 42 in which the machining tools 6 are to be held. In the present embodiment, the number of holes 42 is six. Each machining tool 6 is inserted into an associated one of the holes 42 such that the upper portion of each machining tool 6 is exposed. Replacement of the machining tool 6 involves: returning the machining tool 6 gripped by the gripper 32 of the spindle 30 to the associated hole 42; moving the spindle 30 to a position over the machining tool 6 to be used next; and causing the gripper 32 to grip the upper end of the machining tool 6 located under the gripper 32.

The shaft 58A is internally provided with a rotation shaft 44. The rotation shaft 44 supports the clamp 50 such that the clamp 50 is rotatable. The rotation shaft 44 extends in the right-left direction. The rotation shaft 44 is coupled to the clamp 50 and the conveyor 58. A second motor (not illustrated) is provided for the rotation shaft 44. The second motor is electrically connected to the controller 90 and controlled by the controller 90. The rotation shaft 44 is rotatable in the rotational direction θ_{Y} around the Y axis by the second motor. The rotation of the rotation shaft 44 in the rotational direction θ_{Y} around the Y axis causes the clamp 50 to rotate in the rotational direction θ_{Y} around the Y axis. The rotation shaft 44 is rotatable independently of the shaft 58A. The rotation of the rotation shaft 44 in the rotational direction θ_{Y} around the Y axis thus does not cause the shaft 58A to rotate in the rotational direction θ_{Y} around the Y axis.

The clamp 50 is a retainer to retain the adapter 8 such that the adapter 8 is detachable from the clamp 50. As illustrated in FIG. 5, the number of adapters 8 retainable by the clamp 50 is three in the present embodiment. In the present embodiment, the clamp 50 retains the workpiece(s) 5 through the adapter(s) 8. The cutting apparatus 10 according to the present embodiment cuts the workpiece(s) 5 retained by the clamp 50 through the adapter(s) 8. Alternatively, the clamp 50 may be configured to directly retain the workpiece(s) 5. The clamp 50 is provided with a plurality of the insertion holes 50A. In the present embodiment, the number of insertion holes 50A is three, and the three insertion holes 50A are aligned in the front-rear direction. The connecting pins 8B of the adapters 8 are each inserted into an associated one of the insertion holes 50A. The connecting pins 8B inserted into the insertion holes 50A are secured to the clamp 50 with screws 50B. The clamp 50 is movable together with the tool magazine 40. The tool magazine 40 and the clamp 50 are movable in the X-axis direction by the conveyor 58. The rotation of the clamp 50 in the rotational direction θ_{Y} around the Y axis does not cause the tool magazine 40 to rotate in the rotational direction θ_{Y} around the Y axis.

In one example, the controller 90 is a computer. The controller 90 may include, for example, a central processing unit (CPU), a read-only memory (ROM), a random-access memory (RAM), and a storage medium (such as a memory). The CPU executes a command of a control program. The ROM stores, for example, the program to be executed by the CPU. The RAM is used as a working area where the program is to be expanded. The storage medium stores, for example, various data. The controller 90 may be programmed and configured to control cutting-related operations using, for example, the program stored in the ROM. In the present embodiment, the controller 90 is disposed in the rear portion of the case body 12. Alternatively, a portion or an entirety of the controller 90 may be disposed outside the case body 12.

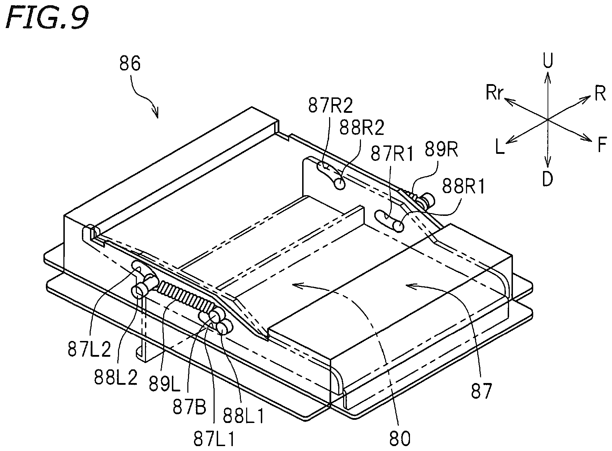

The liquid collector 70 collects at least a portion of the coolant discharged from the liquid discharge nozzles 36. The liquid collector 70 includes the storage tank 37, a movable member 80, and an urger 86 (see FIG. 9). The liquid collector 70 is disposed below the machining space 19. The urger 86 secures the movable member 80 to the second bottom partition 27. The storage tank 37 and the movable member 80 are disposed below the drainage port 27H defined in the second bottom partition 27. The movable member 80 is disposed directly below the drainage port 27H. The storage tank 37 and the movable member 80 are disposed in the second housing space A2. The storage tank 37 is detachably disposed at a predetermined location in the second housing space A2. The movable member 80 is disposed directly above the storage tank 37. The movable member 80 is interposed between the drainage port 27H and the storage tank 37.

FIG. 7 is a perspective view of the storage tank 37. The storage tank 37 is hollow. The storage tank 37 is a container to collect the coolant discharged from the liquid discharge nozzles 36. In the present embodiment, the storage tank 37 also serves as a container to store the coolant to be used for cutting. In the present embodiment, the storage tank 37 has a flat cuboid shape. The storage tank 37, however, is not limited to any particular shape. The storage tank 37 may have, for example, a cylindrical shape, a cubic shape, or a bag shape. The storage tank 37 includes a pair of narrow width surfaces 37N. The narrow width surfaces 37N face each other in the front-rear direction.

An opening 37H is defined in the upper portion of the storage tank 37. An upper lid 37U is placed in the opening 37H. The upper lid 37U is disposed such that the upper lid 37U does not interfere with the movable member 80. The upper lid 37U includes a front portion 37F and a rear portion 37Rr. The front portion 37F is inclined downward from the front of the upper lid 37U toward the rear of the upper lid 37U when viewed in cross section. The rear portion 37Rr is inclined downward from the rear of the upper lid 37U toward the front of the upper lid 37U when viewed in cross section. A collection port 371 that passes through the upper lid 37U in the up-down direction is defined between the front portion 37F and the rear portion 37Rr of the upper lid 37U. The coolant discharged from the liquid discharge nozzles 36 flows through the drainage port 27H defined in the second bottom partition 27, flows along the movable member 80, and then flows into the storage tank 37 through the collection port 37I of the upper lid 37U. The coolant discharged from the liquid discharge nozzles 36 is thus collected into the storage tank 37.

The supply port 37O is provided on the rear portion of the storage tank 37. The supply port 37O is disposed below the collection port 37I. The supply port 37O is formed such that the supply port 37O is fitted to an end of the liquid supply passage. The supply port 37O is connected to the end of the liquid supply passage. A filter 37A is detachably disposed in the storage tank 37. The filter 37A is disposed between the collection port 371 and the supply port 37O. The filter 37A filters the coolant collected into the storage tank 37 through the collection port 371. In one example, the filter 37A removes foreign matter (such as chips or shavings resulting from cutting) from the coolant collected. The coolant filtered is delivered to the liquid supply passage through the supply port 37O and then reused for cutting. In the present embodiment, the storage tank 37 is configured such that the coolant collected is re-delivered to the liquid supply passage. Alternatively, the storage tank 37 may be configured such that the coolant collected undergoes, for example, disposal without being delivered to the liquid supply passage. In such a case, the storage tank 37 may include no filter 37A.

FIG. 8 is a perspective view of the movable member 80. The movable member 80 is not electrically collected to the controller 90. This enables simple control so as to reduce the load on the controller 90. The movable member 80 includes a body 81, a left wall 82, a right wall 83, a vertical partition 84, and a tank contact portion 85. The body 81 extends in the front-rear direction. The vertical partition 84 divides the body 81 into a front body 81F and a rear body 81Rr. In the present embodiment, the front body 81F and the rear body 81Rr each have a flat plate shape. The front body 81F is an example of an inclined portion. The left wall 82 extends upward from the left end of the body 81. The left wall 82 is provided with threaded holes L1 and L2. The right wall 83 extends upward from the right end of the body 81. The right wall 83 is provided with threaded holes R1 and R2. The threaded hole R1 and the threaded hole L1 are symmetrical. The threaded hole R2 and the threaded hole L2 are symmetrical.

The vertical partition 84 extends upward from the rear end of the front body 81F. The front body 81F and the vertical partition 84 are perpendicular or substantially perpendicular to each other when viewed in cross section. The left end of the vertical partition 84 is connected to the left wall 82. The right end of the vertical partition 84 is connected to the right wall 83. The vertical partition 84 is located between the front body 81F and the rear body 81Rr in the front-rear direction. In the present embodiment, the vertical partition 84 has a flat plate shape. The tank contact portion 85 extends downward from a rear end 81B2 of the rear body 81 Rr. The rear body 81Rr and the tank contact portion 85 are perpendicular or substantially perpendicular to each other when viewed in cross section. In the present embodiment, the tank contact portion 85 has a flat plate shape. Alternatively, the tank contact portion 85 may suitably vary in shape in accordance with, for example, the shape of the associated narrow width surface 37N of the storage tank 37.

The movable member 80 is made of, for example, metal (such as stainless steel, aluminum, iron, or copper) or plastic. In the present embodiment, the components of the movable member 80 are integral with each other. This simplifies the structure of the cutting apparatus 10 so as to reduce the number of components of the cutting apparatus 10 and the number of steps required for assembly of the cutting apparatus 10, resulting in a reduction in manufacturing cost. The movable member 80 is provided, for example, by only cutting, drilling, and bending a metal plate. The body 81, the vertical partition 84, and the tank contact portion 85 are provided, for example, by only cutting and bending a metal plate. Alternatively, a portion or an entirety of the movable member 80 may include separate components that are assembled to each other. Because the tank contact portion 85 is optional, the movable member 80 may include no tank contact portion 85.

The body 81 extends substantially straightly in the front-rear direction. The width of the body 81 in the right-left direction is equal to or smaller than the width of the collection port 37I of the storage tank 37 in the right-left direction. The front body 81F is located directly below the drainage port 27H. A front end 81B1 of the front body 81F (i.e., an end of the front body 81 F located adjacent to the storage tank 37) is provided with a bent front end 81E. The bent front end 81E extends downward from the front body 81F. The bent front end 81E is bent toward the storage tank 37. The bent front end 81E is bent at an obtuse bending angle with respect to the front body 81F. The inclination of the bent front end 81E relative to the horizontal direction is greater than the inclination of the front body 81 F relative to the horizontal direction. The bent front end 81E serves as a coolant passage located between the front body 81F and the storage tank 37. Because the coolant flows along the bent front end 81E, the flow of the coolant will be smoother so as to improve the drainage of the movable member 80.

The tank contact portion 85 is disposed such that the tank contact portion 85 comes into contact with the associated narrow width surface 37N of the storage tank 37 when the storage tank 37 is inserted into the second housing space A2. The tank contact portion 85 is supported by the storage tank 37 when the storage tank 37 is inserted into the second housing space A2. The lower end of the tank contact portion 85 is provided with a bent rear end 85E. The bent rear end 85E extends rearward from the tank contact portion 85. The tank contact portion 85 and the bent rear end 85E are perpendicular or substantially perpendicular to each other when viewed in cross section. Providing the bent rear end 85E enhances the rigidity of the tank contact portion 85. Providing the bent rear end 85E makes it difficult for the tank contact portion 85 to damage the storage tank 37, resulting in increased durability of the storage tank 37. The user may put his or her hand into the second housing space A2 in, for example, cleaning the second housing space A2. In such a case, the user is able to clean the second housing space A2 without concern for injury to the hand by the tank abutment portion 85 because the tank abutment portion 85 is provided with the bent rear end 85E.

FIG. 9 is a perspective view of the urger 86. The urger 86 is not electrically connected to the controller 90. The urger 86 includes a support case 87 and two urging springs (i.e., an urging spring 89L and an urging spring 89R). The support case 87 supports the movable member 80 such that the front body 81 F of the movable member 80 is slidable downwardly rearward and the rear body 81 Rr of the movable member 80 is slidable upwardly rearward. The left lateral surface of the support case 87 is provided with slide holes 87L1 and 87L2 extending in the front-rear direction. The right lateral surface of the support case 87 is provided with slide holes 87R1 and 87R2 extending in the front-rear direction. The slide hole 87L1 and the slide hole 87R1 are each in the form of a segment of a circle extending downwardly rearward. The slide hole 87L2 and the slide hole 87R2 are each in the form of a segment of a circle extending upwardly rearward. The shape of the slide hole 87L1 conforms to the track of the threaded hole L1 during sliding of the movable member 80. The shape of the slide hole 87L2 conforms to the track of the threaded hole L2 during sliding of the movable member 80. The shape of the slide hole 87R1 conforms to the track of the threaded hole R1 during sliding of the movable member 80. The shape of the slide hole 87R2 conforms to the track of the threaded hole R2 during sliding of the movable member 80. A bolt 88L1 is inserted through the slide hole 87L1 and the threaded hole L1 of the movable member 80 and fastened with a nut. A bolt 88L2 is inserted through the slide hole 87L2 and the threaded hole L2 of the movable member 80 and fastened with a nut. A bolt 88R1 is inserted through the slide hole 87R1 and the threaded hole R1 of the movable member 80 and fastened with a nut. A bolt 88R2 is inserted through the slide hole 87R2 and the threaded hole R2 of the movable member 80 and fastened with a nut. The movable member 80 is thus secured to the support case 87, so that the movable member 80 is integral with the support case 87. Each of the bolts 88L1, 88L2, 88R1, and 88R2 is an example of a fixture. Any other suitable fixtures (such as screws, machine screws, or pins) may naturally be used to secure the movable member 80 to the support case 87. Ends of the bolts 88L1 and 88L2 protrude outward from the left lateral surface of the support case 87. Ends of the bolts 88R1 and 88R2 protrude outward from the right lateral surface of the support case 87. The right and left lateral surfaces of the support case 87 are respectively provided with right and left protrusions 87B protruding outward.

The urging spring 89L is disposed on the left lateral surface of the support case 87. The urging spring 89R is disposed on the right lateral surface of the support case 87. A first end of the urging spring 89L is coupled to the left protrusion 87B on the left lateral surface of the support case 87. A first end of the urging spring 89R is coupled to the right protrusion 87B on the right lateral surface of the support case 87. A second end of the urging spring 89L is coupled to the bolt 88L2 located rearward of the left protrusion 87B. A second end of the urging spring 89R is coupled to the bolt 88R2 located rearward of the right protrusion 87B. The urging springs 89L and 89R are each disposed to extend substantially in the front-rear direction. The front body 81F of the movable member 80 is urged upwardly forward by the spring force (or elastic force) of the urging springs 89L and 89R. In one example, the urging springs 89L and 89R are helical springs (or coil springs). Each of the urging springs 89L and 89R is an example of an urging member.

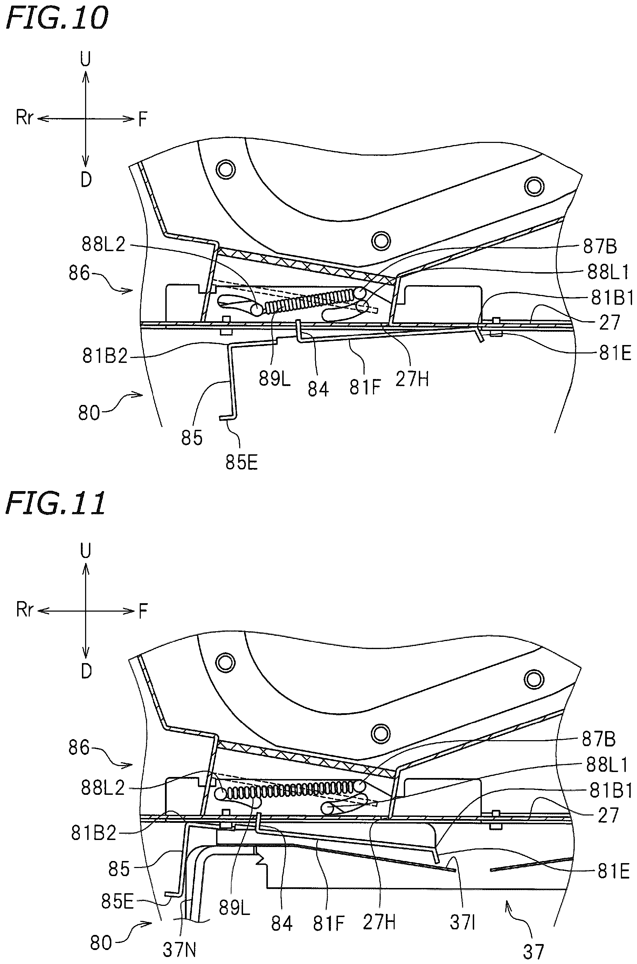

FIG. 10 is a partial cross-sectional view of the cutting apparatus 10, illustrating components thereof located adjacent to the drainage port 27H when no storage tank 37 is disposed in the second housing space A2. FIG. 10 illustrates a partial cross-sectional structure of the cutting apparatus 10 when viewed from its left side. With no storage tank 37 is disposed in the second housing space A2, the movable member 80 is urged by the elastic force of the urging springs 89L and 89R. In this state, the movable member 80 is located at a first position where the front body 81F is relatively close to the bottom of the drainage port 27H. With the movable member 80 at the first position, the front end 81B1 of the front body 81F is located above the rear end 81B2 of the rear body 81Rr when viewed in cross section. With the movable member 80 at the first position, the front end 81B1 may be in contact with the second bottom partition 27 or out of contact with the second bottom partition 27. With the movable member 80 at the first position, the front end 81B1 may be in contact with a portion of the edge of the drainage port 27H or out of contact with a portion of the edge of the drainage port 27H. With the movable member 80 at the first position, the front body 81F is inclined downwardly rearward when viewed in cross section. With the movable member 80 at the first position, the front body 81F is inclined away from the bottom wall 13 of the case body 12. With the movable member 80 at the first position, the front body 81F is inclined at an acute angle (e.g., an angle greater than 0 degrees but less than 90 degrees) with respect to the horizontal direction.

The movable member 80 located at the first position functions as a liquid holder to hold the coolant dripping from the drainage port 27H. More specifically, the liquid holder is defined by the front body 81F, the left wall 82, the right wall 83, and the vertical partition 84 of the movable member 80. The liquid holder is a recess facing upward. In other words, a portion of the movable member 80 that functions as the liquid holder is a recess facing the drainage port 27H. The front body 81F is located directly below the drainage port 27H. The coolant that has dripped from the drainage port 27H falls on the front body 81F and held by the liquid holder.

FIG. 11 is a partial cross-sectional view of the cutting apparatus 10, illustrating components thereof located adjacent to the drainage port 27H when the storage tank 37 is disposed in the second housing space A2. FIG. 11 illustrates a partial cross-sectional structure of the cutting apparatus 10 when viewed from its left side. With the storage tank 37 disposed in the second housing space A2, the tank contact portion 85 of the movable member 80 is supported by the storage tank 37. In this state, the movable member 80 is located at a second position where the front body 81F is relatively away from the bottom of the drainage port 27H against the elastic force of the urging springs 89L and 89R. With the movable member 80 at the second position, the bottom of the drainage port 27H is not covered by the movable member 80. With the movable member 80 at the second position, the rear end 81B2 of the rear body 81Rr is located above the front end 81B1 of the front body 81F when viewed in cross section. With the movable member 80 at the second position, the rear end 81B2 may be in contact with the second bottom partition 27 or may be out of contact with the second bottom partition 27. With the movable member 80 at the second position, the front body 81F is inclined downwardly forward when viewed in cross section. With the movable member 80 at the second position, the front body 81F is inclined toward the collection port 37I of the storage tank 37 when viewed in cross section. With the movable member 80 at the second position, the inclination of the front body 81F relative to the horizontal direction is smaller than the inclination of the rear portion 37Rr of the storage tank 37 relative to the horizontal direction. This prevents the front body 81F and the upper lid 37U of the storage tank 37 from interfering with each other.

The movable member 80 located at the second position functions as a guide to guide the coolant into the storage tank 37. In the present embodiment, the guide is defined by the front body 81F and the bent front end 81E. The front body 81F is located directly below the drainage port 27H. The coolant dripping from the drainage port 27H falls on the front body 81F, flows along the guide, and then drops into the collection port 37I of the storage tank 37. The movable member 80 according to the present embodiment thus functions not only as the liquid holder but also as the guide.

The user disposes the workpiece 5 and the machining tool 6 at predetermined positions in the machining space 19 so as to cut the workpiece 5 using the cutting apparatus 10. The user inserts the storage tank 37 (which stores the coolant) into the second housing space A2 such that the supply port 37O enters the second housing space A2 first. Inserting the storage tank 37 into the second housing space A2 in this manner brings one of the narrow width surfaces 37N of the storage tank 37 into contact with the tank contact portion 85 of the movable member 80. In this state, inserting the storage tank 37 deeper into the second housing space A2 moves the tank contact portion 85 of the movable member 80 upwardly rearward against the elastic force of the urging springs 89L and 89R. In accordance with the movement of the tank contact portion 85, the front end 81B1 of the movable member 80 moves downward. With the storage tank 37 disposed at a predetermined position in the second housing space A2, the movable member 80 is stably supported by the storage tank 37 and brought to rest at the second position. In this state, the front body 81 F of the movable member 80 is inclined toward the supply port 37O of the storage tank 37.

After having finished making preparations for cutting as described above, the user moves the front upper cover 20 downward so as to close the opening 180. The machining space 19 is thus sealed off and separated from the external space. In this state, the controller 90 controls the cutting apparatus 10 so as to cut the workpiece 5 in accordance with cutting data. Specifically, the controller 90 is connected to, for example, the first driver for the first carriage 38A, the second driver for the second carriage 38B, the third driver for the conveyor 58, the first motor for the spindle 30, the second motor for the clamp 50, and the liquid discharge nozzles 36. The controller 90 thus suitably controls the first driver, the second driver, the third driver, the first motor, the second motor, and the liquid discharge nozzles 36. Accordingly, the controller 90 controls the cutting apparatus 10 so as to cut the workpiece 5 while three-dimensionally changing the relative positions of the workpiece 5 retained by the clamp 50 and the machining tool 6 gripped by the gripper 32. The controller 90 causes the liquid discharge nozzles 36 to discharge the coolant when necessary. The coolant discharged from the liquid discharge nozzles 36 during cutting flows downward through the drainage port 27H, flows along the guide defined by at least a portion of the movable member 80, and is then collected into the storage tank 37.

When repetition of cutting has contaminated the coolant in the storage tank 37 or reduced the amount of the coolant in the storage tank 37, the user removes the storage tank 37 from the second housing space A2. The removal of the storage tank 37 by the user brings the tank contact portion 85 of the movable member 80 out of contact with the associated narrow width surface 37N of the storage tank 37. The elastic force of the urging springs 89L and 89R thus causes the tank contact portion 85 of the movable member 80 to move downwardly forward and causes the front end 81B1 to move upward. This brings the movable member 80 to rest at the first position. Consequently, the front body 81F of the movable member 80 is inclined away from the bottom wall 13 of the case body 12.

With the storage tank 37 detached from the cutting apparatus 10, the coolant dripping from the drainage port 27H accumulates in the liquid holder defined by at least a portion of the movable member 80. When the storage tank 37 is returned to the predetermined position in the second housing space A2 by the user, the coolant that has accumulated in the liquid holder is collected into the storage tank 37. Insertion of the storage tank 37 into the second housing space A2 by the user moves the front body 81F of the movable member 80 in a seesaw-like manner. Specifically, the movable member 80 moves from a state where the front end 81B1 of the front body 81F is located above the rear end 81 B2 of the rear body 81Rr to a state where the rear end 81B2 of the rear body 81Rr is located above the front end 81 B1 of the front body 81 F. The coolant that has accumulated in the liquid holder thus flows along the guide and is then collected into the storage tank 37.

As described above, removal of the storage tank 37 from the cutting apparatus 10 according to the present embodiment moves the movable member 80 to the first position, so that the liquid holder is located under the drainage port 27H. In the present embodiment, the liquid holder is defined by the front body 81F, the left wall 82, the right wall 83, and the vertical partition 84 of the movable member 80. Thus, if the coolant remains, for example, on the edge of the drainage port 27H and droplets of the coolant drip when the storage tank 37 is detached from the cutting apparatus 10, the droplets would be held in the liquid holder defined by at least a portion of the movable member 80. This prevents the droplets of the coolant from dripping into the second housing space A2. Consequently, the present embodiment makes it unlikely that the second housing space A2 will be contaminated with the coolant and thus makes it possible to keep the cutting apparatus 10 in a clean state. The present embodiment saves the time and trouble of cleaning, resulting in enhanced user convenience.

The movable member 80 of the cutting apparatus 10 according to the present embodiment functions as the guide to guide the coolant into the storage tank 37 when the movable member 80 is located at the second position. In the present embodiment, the guide is defined by the front body 81F and the bent front end 81E continuous with each other. The coolant is thus more unlikely to splash or spatter between the drainage port 27H and the storage tank 37 than when, for example, no guide is provided. Consequently, the coolant is more reliably collected into the storage tank 37.

The cutting apparatus 10 according to the present embodiment is configured such that the coolant is held by the liquid holder when the movable member 80 is located at the first position, and the coolant is guided into the storage tank 37 by the guide when the movable member 80 is located at the second position. This enhances the efficiency of collecting the coolant so as to reuse the coolant without any waste.

The movable member 80 of the cutting apparatus 10 according to the present embodiment includes the inclined portion disposed directly below the drainage port 27H. In the present embodiment, the inclined portion is the front body 81F. The inclination of the front body 81F of the movable member 80 at the first position is opposite in direction to the inclination of the front body 81F of the movable member 80 at the second position when viewed in cross section. Thus, the coolant used for cutting is efficiently collectable into the storage tank 37 with a simple structure. This consequently reduces the number of components and the number of assembly steps, resulting in a reduction in manufacturing cost.

The movable member 80 of the cutting apparatus 10 according to the present embodiment is moved from the first position to the second position by attaching of the storage tank 37 to the cutting apparatus 10 by the user. This eliminates the need for a driver to move the movable member 80 between the first position and the second position. The cutting apparatus 10 is thus further simplified in structure.

The cutting apparatus 10 according to the present embodiment includes the urging springs 89L and 89R to urge the movable member 80 to the first position. The movable member 80 is thus reliably maintained at the first position when the storage tank 37 is not disposed in the second housing space A2.

The movable member 80 of the cutting apparatus 10 according to the present embodiment includes the bent front end 81E that is provided on an end of the movable member 80 adjacent to the storage tank 37 and is bent toward the storage tank 37, with the storage tank 37 disposed in the second housing space A2. With the movable member 80 at the second position, the bent front end 81E functions as a portion of the guide. With the movable member 80 at the second position, the bent front end 81E functions as a coolant passage between the front body 81F and the storage tank 37. This makes the flow of the coolant smoother so as to improve the drainage of the movable member 80.

The machining space 19 and the second housing space A2 of the cutting apparatus 10 according to the present embodiment are in constant communication with each other through the drainage port 27H.

Although a preferred embodiment of the present invention has been described thus far, the foregoing embodiment is only illustrative, and the present invention may be embodied in various other forms without departing from the scope of the appended claims.

In the foregoing embodiment, the body 81 (or more specifically, the front body 81F), the left wall 82, the right wall 83, the vertical partition 84, and the tank contact portion 85 of the movable member 80 each have, for example, a flat plate shape when viewed in cross section. Each of these components of the movable member 80 may have any other suitable shape. The front body 81F may have, for example, a V shape or a U shape in a cross section taken in the right-left direction, such that the right and left portions of the front body 81F extend downward toward the center of the front body 81F in the right-left direction.

In the foregoing embodiment, the movable member 80 is moved from the first position to the second position by attaching of the storage tank 37 to the cutting apparatus 10 by the user. The movable member 80 may be moved from the first position to the second position in any other suitable manner. In one example, the movable member 80 may be electrically connected to the controller 90 and moved from the first position to the second position upon receiving a signal from the controller 90.

In one example, a sensor to detect whether the storage tank 37 is disposed in the second housing space A2 may be provided, for example, on the bottom of the second housing space A2. The sensor may be, for example, a contact sensor (such as a weight sensor) or a non-contact sensor (such as a photosensor). The movable member 80 may move from the first position to the second position upon determination by the controller 90 that the storage tank 37 is disposed in the second housing space A2 in accordance with a signal transmitted to the controller 90 from the sensor.

## Claims

1. A cutting apparatus (10) comprising:
a case body (12) internally including
a machining space (19),
a housing space (A2) located below the machining space (19), and
a communication port (27H) through which the machining space (19) is in communication with the housing space (A2);
a retainer (50) disposed in the machining space (19), the retainer (50) being configured to retain a workpiece (5);
a gripper (32) disposed in the machining space (19), the gripper (32) being configured to grip a machining tool (6) to cut the workpiece (5);
a liquid discharger (36) to discharge a coolant into the machining space (19);
a storage tank (37) detachably disposed in the housing space (A2), the storage tank (37) being configured to collect the coolant discharged from the liquid discharger (36) and passed through the communication port (27H); and
a movable member (80) disposed between the communication port (27H) and the storage tank (37), the movable member (80) being located at a first position when the storage tank (37) is not disposed in the housing space (A2), the movable member (80) being located at a second position when the storage tank (37) is disposed in the housing space (A2), **characterised in that**
the movable member (80) located at the first position functions as a liquid holder to hold the coolant.

2. The cutting apparatus (10) according to claim 1, wherein
the movable member (80) located at the second position functions as a guide to guide the coolant into the storage tank (37).

3. The cutting apparatus (10) according to claim 1 or 2, wherein
the coolant held by the liquid holder when the movable member (80) is located at the first position is guided into the storage tank (37) upon movement of the movable member (80) from the first position to the second position.

4. The cutting apparatus (10) according to any one of claims 1 to 3, wherein
the movable member (80) includes an inclined portion (81F) disposed directly below the communication port (27H), and
an inclination of the inclined portion (81F) of the movable member (80) at the first position is opposite in direction to an inclination of the inclined portion (81F) of the movable member (80) at the second position when viewed in cross section.

5. The cutting apparatus (10) according to any one of claims 1 to 4, wherein
the movable member (80) is moved from the first position to the second position by attaching of the storage tank (37) to the cutting apparatus (10) by a user.

6. The cutting apparatus (10) according to any one of claims 1 to 5, further comprising an urging member (89L, 89R) to urge the movable member (80) to the first position.

7. The cutting apparatus (10) according to any one of claims 1 to 6, wherein
the movable member (80) includes a bent portion (81E) that is provided on an end of the movable member (80) adjacent to the storage tank (37) and is bent toward the storage tank (37).

8. The cutting apparatus (10) according to any one of claims 1 to 7, wherein
the machining space (19) and the housing space (A2) are in constant communication with each other through the communication port (27H).

## Patentansprüche

1. Schneidvorrichtung (10), umfassend:
einen Gehäusekörper (12), der intern umfasst
einen Bearbeitungsraum (19),
einen Gehäuseraum (A2), der unter dem Bearbeitungsraum (19) angeordnet ist, und
eine Verbindungsschnittstelle (27H), durch welche der Bearbeitungsraum (19) in Verbindung mit dem Gehäuseraum (A2) steht;
einen Halter (50), der in dem Bearbeitungsraum (19) angeordnet ist, wobei der Halter (50) konfiguriert ist, ein Werkstück (5) zu halten;
einen Greifer (32), der in dem Bearbeitungsraum (19) angeordnet ist, wobei der Greifer (32) konfiguriert ist, ein Bearbeitungswerkzeug (6) zum Schneiden des Werkstücks (5) zu greifen;
eine Flüssigkeitsabgabevorrichtung (36), um ein Kühlmittel in den Bearbeitungsraum (19) abzugeben;
einen Speichertank (37), der in dem Gehäuseraum (A2) abnehmbar angeordnet ist, wobei der Speichertank (37) konfiguriert ist, das von der Flüssigkeitsabgabevorrichtung (36) abgegebene und durch die Verbindungsschnittstelle (27H) gelaufene Kühlmittel zu sammeln; und
ein bewegliches Element (80), das zwischen der Verbindungschnittstelle (27H) und dem Speichertank (37) angeordnet ist, wobei das bewegliche Element (80) an einer ersten Position angeordnet ist, wenn der Speichertank (37) nicht in dem Gehäuseraum (A2) angeordnet ist, wobei das bewegliche Element (80) an einer zweiten Position angeordnet ist, wenn der Speichertank (37) in dem Gehäuseraum (A2) angeordnet ist,
**dadurch gekennzeichnet, dass**
das an der ersten Position angeordnete bewegliche Element (80) als eine Flüssigkeitshaltevorrichtung fungiert, um das Kühlmittel zu halten.

2. Die Schneidvorrichtung (10) gemäß Anspruch 1, wobei
das an der zweiten Position angeordnete bewegliche Element (80) als eine Führung fungiert, um das Kühlmittel in den Speichertank (37) zu führen.

3. Die Schneidvorrichtung (10) gemäß Anspruch 1 oder 2, wobei
das Kühlmittel, das von der Kühlmittelhaltevorrichtung gehalten wird, wenn das bewegliche Element (80) an der ersten Position angeordnet ist, bei Bewegung des beweglichen Elements (80) von der ersten Position zu der zweiten Position in den Speichertank (37) geführt wird.

4. Die Schneidvorrichtung (10) gemäß einem der Ansprüche 1 bis 3, wobei
das bewegliche Element (80) einen geneigten Abschnitt (81F) umfasst, der direkt unter der Verbindungsschnittstelle (27H) angeordnet ist, und
eine Neigung des geneigten Abschnitts (81F) des beweglichen Elements (80) an der ersten Position im Querschnitt gesehen in entgegengesetzter Richtung zu einer Neigung des geneigten Abschnitts (81F) des beweglichen Elements (80) an der zweiten Position ist.

5. Die Schneidvorrichtung (10) gemäß einem der Ansprüche 1 bis 4, wobei
das bewegliche Element (80) durch Anbringen des Speichertanks (37) an der Schneidvorrichtung (10) durch einen Benutzer von der ersten Position zu der zweiten Position bewegt wird.

6. Die Schneidvorrichtung (10) gemäß einem der Ansprüche 1 bis 5, ferner umfassend ein drängendes Element (89L, 89R), um das bewegliche Element (80) zu der ersten Position zu drängen.

7. Die Schneidvorrichtung (10) gemäß einem der Ansprüche 1 bis 6, wobei
das bewegliche Element (80) einen gebogenen Abschnitt (81E) umfasst, der an einem Ende des beweglichen Elements (80) neben dem Speichertank (37) bereitgestellt ist und in Richtung des Speichertanks (37) gebogen ist.

8. Die Schneidvorrichtung (10) gemäß einem der Ansprüche 1 bis 7, wobei
der Bearbeitungsraum (19) und der Gehäuseraum (A2) durch die Verbindungsschnittstelle (27H) in konstanter Verbindung miteinander stehen.

## Revendications

1. Appareil de coupe (10) comprenant :
un corps de boîtier (12) comprenant à l'intérieur
un espace d'usinage (19),
un espace de logement (A2) situé sous l'espace d'usinage (19), et
un orifice de communication (27H) à travers lequel l'espace d'usinage (19) est en communication avec l'espace de logement (A2) ;
un élément de retenue (50) disposé dans l'espace d'usinage (19), l'élément de retenue (50) étant configuré pour retenir une pièce à usiner (5) ;
un élément de saisie (32) disposé dans l'espace d'usinage (19), l'élément de saisie (32) étant configuré pour saisir un outil d'usinage (6) pour couper la pièce à usiner (5) ;
un déchargeur de liquide (36) pour décharger un réfrigérant dans l'espace d'usinage (19);
un réservoir de stockage (37) disposé de manière amovible dans l'espace de logement (A2), le réservoir de stockage (37) étant configuré pour collecter le réfrigérant déchargé par le déchargeur de liquide (36) et passé à travers l'orifice de communication (27H) ; et
un élément mobile (80) disposé entre l'orifice de communication (27H) et le réservoir de stockage (37), l'élément mobile (80) étant situé à une première position lorsque le réservoir de stockage (37) n'est pas disposé dans l'espace de logement (A2), l'élément mobile (80) étant situé à une seconde position lorsque le réservoir de stockage (37) est disposé dans l'espace de logement (A2), **caractérisé en ce que**
l'élément mobile (80) situé à la première position fonctionne comme un support de liquide pour supporter le réfrigérant.

2. Appareil de coupe (10) selon la revendication 1, dans lequel
l'élément mobile (80) situé à la seconde position fonctionne comme un guide pour guider le réfrigérant dans le réservoir de stockage (37).

3. Appareil de coupe (10) selon la revendication 1 ou 2, dans lequel
le réfrigérant supporté par le support de liquide lorsque l'élément mobile (80) est situé à la première position est guidé dans le réservoir de stockage (37) lors du déplacement de l'élément mobile (80) de la première position vers la seconde position.

4. Appareil de coupe (10) selon l'une quelconque des revendications 1 à 3, dans lequel l'élément mobile (80) comprend une partie inclinée (81F) disposée directement sous l'orifice de communication (27H), et
une inclinaison de la partie inclinée (81F) de l'élément mobile (80) à la première position est opposée en termes de direction à une inclinaison de la partie inclinée (81 F) de l'élément mobile (80) à la seconde position lorsqu'observée en coupe transversale.

5. Appareil de coupe (10) selon l'une quelconque des revendications 1 à 4, dans lequel l'élément mobile (80) est déplacé de la première position jusqu'à la seconde position en attachant le réservoir de stockage (37) à l'appareil de coupe (10) par un utilisateur.

6. Appareil de coupe (10) selon l'une quelconque des revendications 1 à 5, comprenant en outre un élément de poussée (89L, 89R) pour pousser l'élément mobile (80) vers la première position.

7. Appareil de coupe (10) selon l'une quelconque des revendications 1 à 6, dans lequel l'élément mobile (80) comprend une partie pliée (81E) qui est agencée sur une extrémité de l'élément mobile (80) adjacente au réservoir de stockage (37) et qui est pliée vers le réservoir de stockage (37).

8. Appareil de coupe (10) selon l'une quelconque des revendications 1 à 7, dans lequel l'espace d'usinage (19) et l'espace de logement (A2) sont en communication constante l'un avec l'autre à travers l'orifice de communication (27H).
